# EUROPEAN PATENT APPLICATION

(11) **EP 3 690 238 A1**
(43) Date of publication of application: **05.08.2020**
(21) Application number: 19154390.9
(22) Date of filing: 30.01.2019
(51) Int. Cl.: F03D 80/30

(54) **CURRENT TRANSFER ARRANGEMENT OF A WIND TURBINE LIGHTNING PROTECTION SYSTEM**

(71) Applicant: Siemens Gamesa Renewable Energy A/S, 7330 Brande (DK)
(72) Inventor: Buch-Lorentsen, Karsten, 8680 Ry (DK); Olsen, Kaj, 8240 Riiskov (DK)
(74) Representative: Aspacher, Karl-Georg

(57) **Abstract**

The invention describes a current transfer arrangement (1) of a wind turbine lightning protection system, which current transfer arrangement (1) comprises an electrically conductive blade root band (10) realised for mounting on the exterior of the root end (200) of a rotor blade (20); a down conductor segment (11) realised to be mounted on the exterior of a rotatable housing (22) of a wind turbine (2); and a brush assembly (12, B) realised to transfer lightning current from the blade root band (10) to the down conductor segment (11). The invention further describes a direct-drive wind turbine (2) comprising such a current transfer arrangement (1).

## Description

The invention describes a current transfer arrangement of a wind turbine lightning protection system, and a direct-drive wind turbine.

Because of its height and generally exposed location, a wind turbine may receive frequent lightning strikes and must be equipped with a reliable lightning protection system (LPS) to prevent damage to its rotor blades, its electrical components, and its structural components. A wind turbine rotor blade is normally provided with one or more receptors on its outer surface that act to attract a lightning strike. Each receptor is connected to a download cable or "down conductor" extending through the blade interior. A down conductor usually extends from near the thin blade tip (at the outermost end of the blade) to the circular root (at the innermost end of the blade, where it is mounted to the hub) and is dimensioned to safely transport lightning current.

Usually, the only physical connection between the rotatable aerodynamic rotor and the stationary part of the wind turbine is via a bearing.

This must also be protected from lightning current. Therefore, the wind turbine's LPS must include some kind of lightning current bridge from the rotating part of the wind turbine to its stationary part. From each blade root end, lightning current must be led to the stationary region of the wind turbine, from which it can be transported through a down conductor arrangement through the tower and to ground.

The conventional approach is to lead the rotor blade down conductors into the hub interior cavity, and to provide a sliding ring arrangement to transfer the lightning current to the stationary region of the wind turbine. However, particularly in large direct-drive wind turbines, it is difficult to ensure a reliable transfer of lightning current from the rotating aerodynamic rotor (the rotor blades and the hub) to a stationary part. If a reliable path cannot be provided for the lightning current, flashover damage may ensue. This can be a problem for another reason, namely because the capacious hub of a large wind turbine may also be used to accommodate various electrical components. These are at risk of damage by lightning currents, and it can be expensive and hazardous to carry out repair procedures.

It is therefore an object of the invention to provide an improved way of transporting lightning current from the aerodynamic rotor of a wind turbine.

This object is achieved by the current transfer arrangement of claim 1; and by the direct-drive wind turbine of claim 11.

According to the invention, the current transfer arrangement is part of a wind turbine lightning protection system and comprises an electrically conductive blade root band realised for mounting on the exterior of the root end of a rotor blade; a down conductor segment realised to be mounted on the exterior of a rotatable housing of a generator of the wind turbine; and a spring-loaded brush assembly realised to transfer or conduct lightning current from the blade root band to the down conductor segment.

The rotatable housing of the generator may be assumed to be arranged about an outer rotor of a direct-drive generator. The hub and the rotatable generator housing of a direct-drive generator effectively rotate as one unit. The rotor blades of such a wind turbine may be assumed to be pitch-controlled, i.e. each rotor blade can be rotated about its longitudinal axis within a certain range so that the rotor blades can extract as much energy as possible out of the wind. The blade root band may be assumed to be mounted to a rotor blade in such a way that the band is mostly in the lee of the rotor blade, i.e. it faces primarily downwind and towards the generator.

The brush assembly may be assumed to comprise a number of brushes, i.e. carbon or graphite brushes, that are pressed against a contact face of the root band in such a way that they can slide along the contact face of the root band. This is the usual manner in which an electrical brush transfers current between a stationary component and a rotating component.

The current transfer arrangement may be assumed to have the down conductor segment mounted essentially at the same level as the root band. Because the longitudinal axis of a rotor blade is essentially orthogonal to the main axis of the generator, the down conductor segment may be assumed to be essentially perpendicular to the contact face of the root band. The inventive current transfer arrangement effectively acts as a bridge between the rotating part and the stationary part of the wind turbine LPS, and the terms "current transfer arrangement" and "LPS current bridge" may be used interchangeably in the following.

An advantage of the inventive current transfer arrangement is that it can be made using only a small number of parts that can be made in a straightforward manner. The inventive current transfer arrangement therefore provides a simple and cost-effective way of connecting the interior down conductor of a rotor blade to the interior down conductor inside a generator housing, while at the same time ensuring reliable transfer of lightning current.

According to the invention, the direct-drive wind turbine comprises a number of rotor blades mounted on a hub and rotatable generator housing connected to the hub. The inventive direct-drive wind turbine further comprises a lightning protection system with at least a down-conductor arranged in the interior of each rotor blade; a down conductor arranged in the interior of the rotatable housing; and at least one embodiment of the inventive current transfer arrangement, of which the blade root band is mounted on the exterior of the root end of a rotor blade, and the down conductor segment is mounted on the exterior of the rotatable housing.

An advantage of the inventive direct-drive wind turbine according to the invention is that the current transfer arrangement makes it favourably easy to connect the rotor blade down conductor to a down conductor inside the stationary region of the wind turbine, while also ensuring reliable transfer of lightning currents from the rotating part. This aspect of the manufacture and installation of the wind turbine LPS can therefore be realised in a more economical manner.

Particularly advantageous embodiments and features of the invention are given by the dependent claims, as revealed in the following description. Features of different claim categories may be combined as appropriate to give further embodiments not described herein.

A horizontal-axis wind turbine is generally one of two types: indirect drive (with gearbox) or direct-drive (without gearbox). The aerodynamic rotor (rotor blades and hub) of an indirect-drive wind turbine is mounted at the front end of a nacelle to a low-speed rotating main shaft that extends to the gearbox and which is mounted to a bedplate. The gearbox converts the low-speed rotation of the main shaft to a highspeed rotation of the generator rotor. The entire nacelle is stationary. In contrast, the aerodynamic rotor of a direct-drive wind turbine is mounted to the rotor of the generator, and the generator rotor is contained in a housing that also rotates. Usually, this rotor shroud or canopy interfaces to a stationary canopy by means of a labyrinth seal. When reference is made to a wind turbine in the context of the invention, this construction may be assumed.

As mentioned above, the blade root band is arranged on the exterior of a rotor blade root end. In a preferred embodiment of the invention, the blade root band is shaped to extend over an arc spanning at least 90°, more preferably up to 120°, of the circumference of the root end of a rotor blade. Therefore, for any pitch position of the rotor blade, a reliable contact can be maintained between the blade root band and any brushes of the brush assembly. The blade root band may be formed in the shape of an arc segment. The length of a blade root band may be chosen according to the maximum +/- pitch angles of the rotor blade.

The blade root band can be manufactured using any suitable technique. For example, it may be provided as a metal profile shaped to lie against the rotor blade outer surface and to present a uniform contact face to the brushes of the brush assembly. Stainless steel, aluminium or any other suitable metal may be used to manufacture the blade root band.

Preferably, the blade root band is realised to be electrically connected to a down conductor arranged in the interior of the rotor blade. To this end, one or more electrically conductive connectors can extend from the blade root band through the body of the rotor blade and into the blade interior, for connection to the blade down conductor in the blade interior.

The brush assembly can comprise any number of brushes. Preferably, multiple brushes are deployed in a redundant arrangement so that a reliable electrical contact is maintained against the blade root band even if a brush is worn and in need of replacement.

A brush of the brush assembly can be made in the usual manner from carbon or graphite, as will be known to the skilled person. Preferably, a brush comprises a relatively large front face for making electrical contact to the blade root band, and a robust terminal which can be electrically connected to the down conductor segment.

The brush assembly can be made in any suitable way to hold a number of brushes. Preferably, the brush assembly comprises a brush holder that has a favourably thick metal body part to which a brush terminal can be welded or soldered, for example. A similar electrical connection can be made between the metal body part and one end of the down conductor segment. This metal body part can be shaped in the form of a box, for example, to accommodate the desired number of brushes and to provide a surface for forming the necessary electrical connections. Preferably, the brush assembly is realised to accommodate at least two brushes, more preferably at least four brushes.

The other end of the down conductor segment is electrically connected to a down conductor in the interior of the rotatable housing, preferably in a straightforward manner. To this end, the inventive LPS current bridge preferably comprises a bracket for mounting the down conductor segment to the rotatable housing. The bracket can serve to provide a way of securing the relevant end of the down conductor segment to an electrically conductive path into the interior of the rotatable housing. This can be achieved, for example, by shaping the bracket to include a mounting plate, and soldering or welding one end of the down conductor segment to this mounting plate. The bracket can also serve to support the brush assembly. Preferably, the brush assembly is spring-loaded so that the brushes are always pressed against the contact face of the blade root band. To this end, the bracket preferably comprises a leaf-spring arrangement for mounting the brush assembly to the bracket.

The blade root band can be mounted at any suitable position along the rotor blade, and is preferably arranged in the lee of the rotor blade (i.e. facing towards the generator). In a preferred embodiment of the invention, the blade root band of an LPS current bridge is mounted at a distance radially outward along the blade that corresponds to the radius of the essentially circular generator housing. A down conductor in the interior of the rotor blade can preferably be electrically connected to the blade root band using a number of conductive elements such as studs or bolts that extend through the rotor blade wall. The corresponding bracket of the LPS current bridge can then be mounted on the outer cylindrical surface of the generator housing. For a rotor blade comprising three rotor blades, three such brackets will be mounted equidistantly about the outer surface of the generator housing.

In an alternative embodiment, the blade root band of a current transfer arrangement can be realised as an outer ring of a blade bearing, to make use of the fact that such an outer ring will move as one with the blade when the blade pitch angle is changed. In such a realisation, a corresponding bracket can be mounted on the essentially vertical face of the generator housing. For a rotor blade comprising three rotor blades, three such brackets will be mounted equidistantly about the front face of the generator housing. In this embodiment, a down-conductor in the interior of the rotor blade is electrically connected to the outer ring of the blade bearing.

Other objects and features of the present invention will become apparent from the following detailed descriptions considered in conjunction with the accompanying drawings. It is to be understood, however, that the drawings are designed solely for the purposes of illustration and not as a definition of the limits of the invention.
- Fig 1: shows a simplified diagram of a directdrive wind turbine and its LPS according to an embodiment of the invention;
- Fig 2 and Fig 3: show close-up views of a current transfer arrangement deployed by the wind turbine of Fig 1;
- Fig 4: shows a cut-away view of the current transfer arrangement deployed by the wind turbine of Figs 2 and 3;
- Fig 5: shows an alternative embodiment of the inventive current transfer arrangement;
- Fig 6: shows a close-up view of the current transfer arrangement of Fig 5;
- Fig 7: shows a simplified diagram of a conventional wind turbine and its LPS.

In the diagrams, like numbers refer to like objects throughout. Objects in the diagrams are not necessarily drawn to scale.

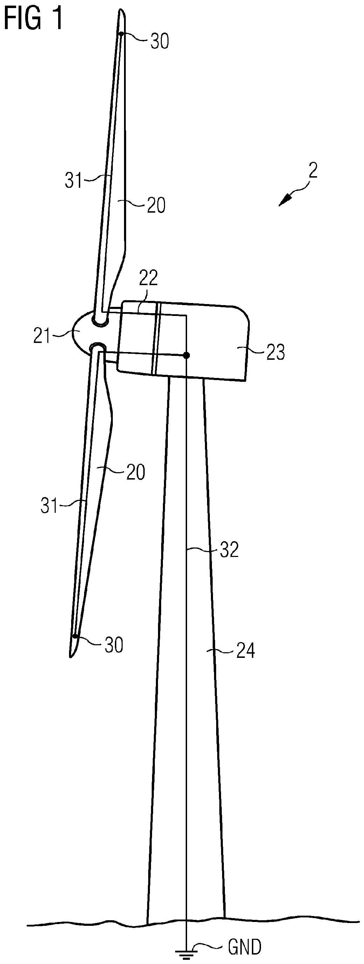

Fig 1 is a simplified diagram of a direct-drive wind turbine 2 and its LPS. The aerodynamic rotor of the wind turbine comprises the rotor blades 20 mounted to the hub 21. The outer rotor of the generator is enclosed in a housing 22 that is mounted to the outer rotor. Since the outer rotor of a direct-drive generator is turned by the hub 21, the hub 21 and housing 22 rotate as one. The diagram also shows a stationary part 23 or nacelle 23 mounted by means of a yaw interface at the top of a tower 24.

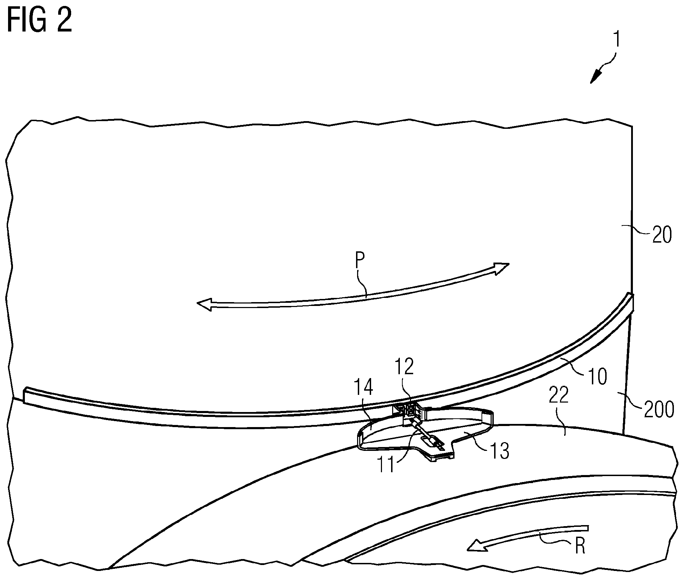

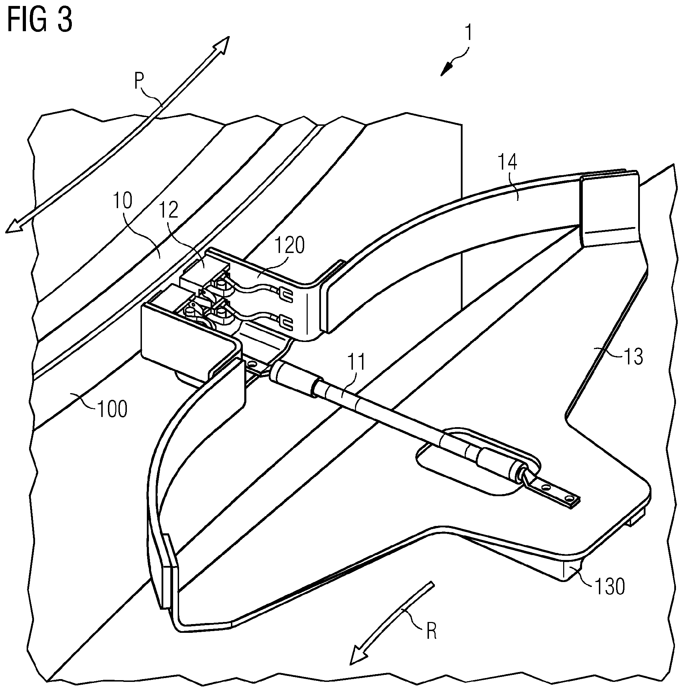

To safely conduct lightning current to ground, each rotor blade 20 is equipped with a number of receptors 30 connected to a down conductor 31 in the interior of the blade 20. Fig 2 and Fig 3 show close-up views of an LPS current bridge 1 deployed by the wind turbine 2 of Fig 1. The diagrams show the root end 200 of a rotor blade 20, and a blade root band 10 extending over about 120° of the circumference of the blade root end 200. The rotor blade 20 can be pitched in the direction P indicated by the double-pointed arrow. The aerodynamic rotor 20, 21 and generator housing 22 all rotate as one in the direction R indicated.

A rotor blade down conductor 31 as shown in Fig 1 is connected to the electrically conductive blade root band 10. At the same height, a down conductor segment 11 of the LPS current bridge 1 is mounted vis-à-vis a contact face 100 of the blade root band 10 on the exterior of the rotatable housing 22. A spring-loaded brush assembly 12, B is provided to press a number of brushes B against the contact face 100 of the blade root band 10 to transfer lightning current from the blade root band 10 to the down conductor segment 11. The down conductor segment 11 of the LPS current bridge 1 is electrically connected (e.g. via a brush/slip-ring assembly) to a further path 32 of the wind turbine's LPS arranged inside the housing 22, from where the lightning current can be transported safely to ground GND.

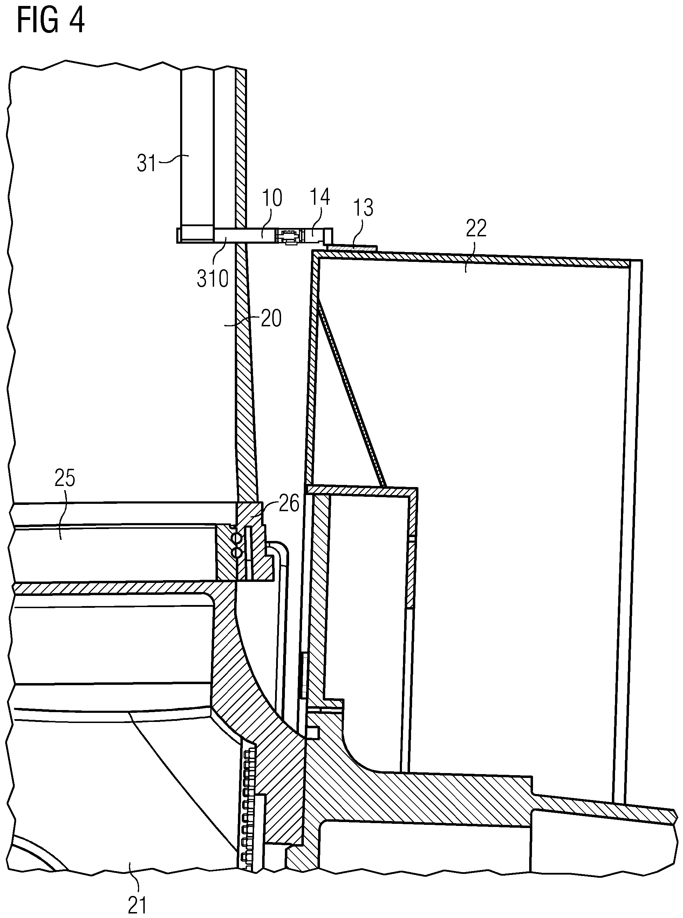

Fig 2 and Fig 3 also show a bracket 13 of the LPS current bridge 1 mounted on the annular outer surface of the generator housing 22. The bracket 13 is shaped to hold a pair of leaf springs 14, which in turn are mounted to the brush holder 12. This is shaped to accommodate several brushes B, in this case four brushes B in a 2 x 2 arrangement. The terminals of the brushes B and one end of the down conductor segment 11 are electrically connected together by means of a metal part 120 of the brush holder 12. The other end of the down conductor segment 11 is electrically connected to a mounting plate 130 of the bracket 13. This in turn is electrically connected to a further part of the LPS arranged in the interior of the housing 22. This is shown in Fig 4, which is a cut-away view into a portion of the wind turbine 2 of Fig 1, showing a bearing 25, 26 as mounting interface between blade 20 and hub 21. Here, the blade root band 10 is mounted on the exterior of the blade 20 at a distance outward along the blade. With reference to the rotational axis of the aerodynamic rotor, the blade root band mounting positon corresponds essentially to a radius of the rotatable housing 22. This diagram shows the electrical connection between the down conductor 31 inside the rotor blade 20 to the blade root band 10, and the electrical connection between the down conductor segment 11 and a down conductor 32 in the generator housing 22. The diagram also clearly shows that the down conductor segment 11 is mounted vis-à-vis the root band 10, making it relatively straightforward to provide an electrical connection between these two parts.

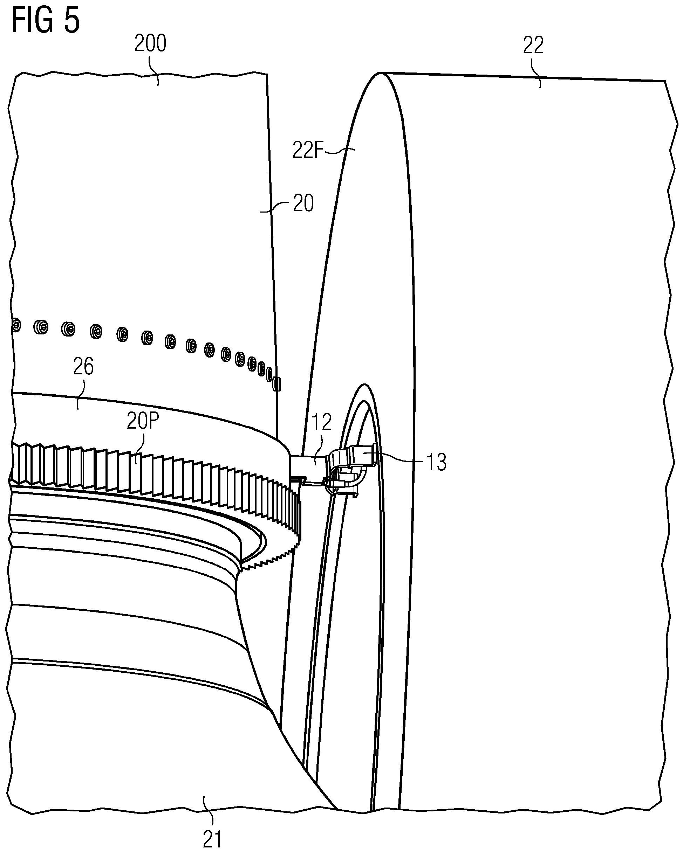

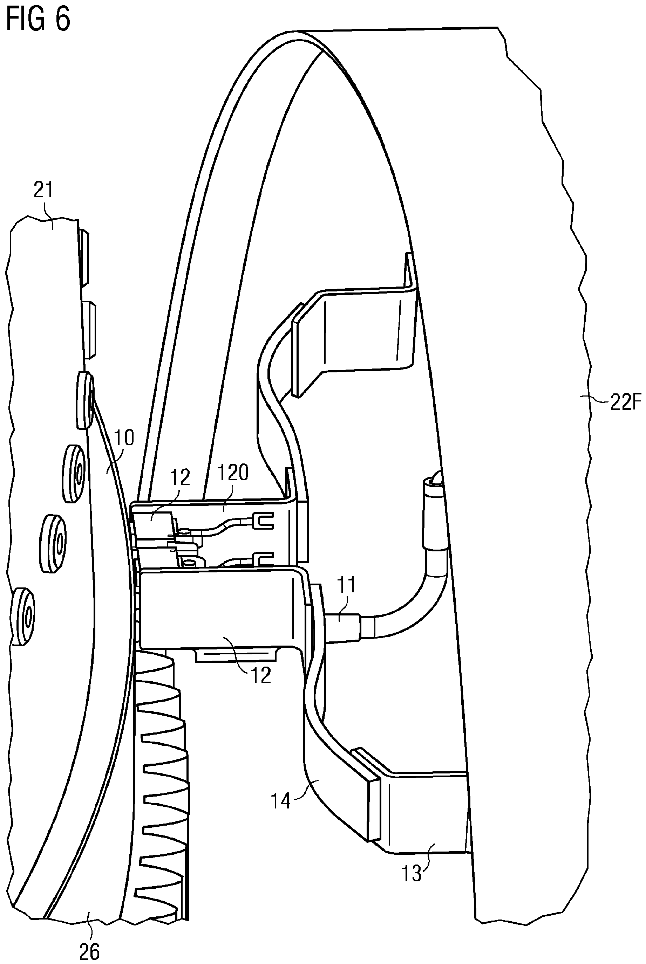

Fig 5 shows an alternative embodiment of the inventive LPS current bridge 1, in which the blade root band 10 is not realised as a dedicated component, but is provided in the form of an outer ring 26 of the blade bearing. In the embodiment shown here, the outer ring of the blade bearing is next to a toothed ring of the pitch interface. Since a blade bearing and pitch interface is generally realised at the lowest end of the blade root, the blade root band 10 in this embodiment is positioned very close to the hub 21. Therefore, the down conductor segment 11 is mounted at a suitable level on the front face 22F of the rotatable generator housing 22. Fig 6 shows a close-up view of the embodiment of Fig 5. A bracket 13 is mounted on the front face 22F of the generator housing 22 at the level of the bearing outer ring 26, which can be adjacent to a toothed ring of the pitch interface. In this embodiment also, the bracket 13 is shaped to hold a pair of leaf springs 14, which in turn are mounted to a brush holder 12. This is shaped to accommodate several brushes B. The leaf springs 14 ensure that the brushes are continually pressed against the blade root band 10, i.e. against the outer ring 26 of the blade bearing in this embodiment. The terminals of the brushes B and one end of the down conductor segment 11 are electrically connected together by means of a metal part 120 of the brush holder 12. The other end of the down conductor segment 11 is electrically connected to a further part of the LPS arranged in the interior of the housing 22.

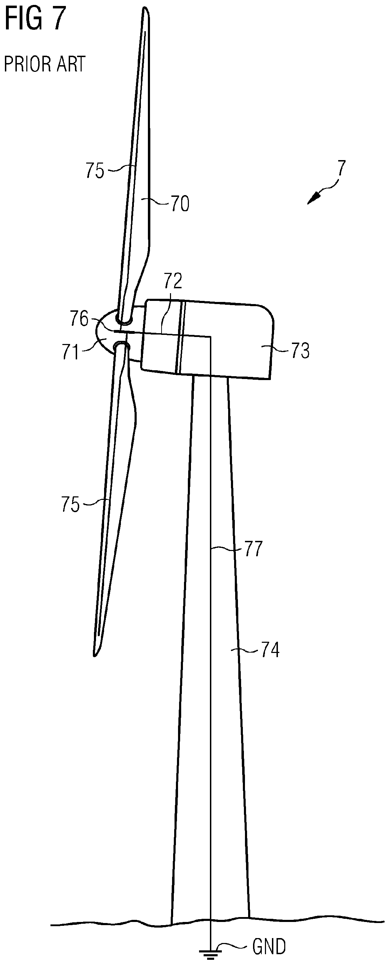

Fig 7 shows a simplified diagram of a conventional wind turbine 7 and its LPS. Here also, the wind turbine 7 is a direct-drive wind turbine 7 with rotor blades 70 mounted to a hub 71 that turns as one with a generator housing 72, and a stationary nacelle 73 is mounted at the top level of a tower 74. In this conventional wind turbine 7, rotor blade down conductors 75 extend into the hub interior, where a brush and contact ring arrangement 76 is used to transfer lightning current from the rotating part 71 to a down conductor 77 commencing in the stationary part of the wind turbine 7 and ultimately leading down through the tower 74 to ground GND. However, there may be various electrical components arranged in the relatively capacious hub 71, and leading the lightning current into the hub interior can place these components at risk of damage.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A current transfer arrangement (1) of a wind turbine lightning protection system, which current transfer arrangement (1) comprises
- an electrically conductive blade root band (10) realised for mounting on the exterior of a rotor blade (20) in the root end region (200);
- a down conductor segment (11) realised to be mounted on the exterior of a rotatable housing (22) of a wind turbine (2); and
- a brush assembly (12, B) realised to transfer lightning current from the blade root band (10) to the down conductor segment (11).

2. A current transfer arrangement according to claim 1, wherein the blade root band (10) is shaped to extend over at least 80°, more preferably at least 100°, of the circumference of the root end (200) of a rotor blade (20).

3. A current transfer arrangement according to claim 1 or claim 2, wherein the blade root band (10) is realised to be electrically connected to a down conductor (31) arranged in the interior of the rotor blade (20).

4. A current transfer arrangement according to any of the preceding claims, wherein the blade root band (10) comprises a profile with a contact face (100) arranged to lie against a brush (B) of the brush assembly (12, B).

5. A current transfer arrangement according to any of the preceding claims, wherein the brush assembly (12, B) comprises a number of brushes (B), wherein a brush (B) comprises a front face for making electrical contact to the blade root band (10) and a terminal for electrical connection to the down conductor segment (11).

6. A current transfer arrangement according to any of the preceding claims, wherein the brush assembly (12, B) comprises a brush holder (120) realised to provide an electrical connection between a brush (B) and the down conductor segment (11).

7. A current transfer arrangement according claim 6, wherein the brush holder (120) is realised to accommodate at least two brushes (B), more preferably at least four brushes (B).

8. A current transfer arrangement according to any of the preceding claims, wherein the down conductor segment (11) is realised to be electrically connected to a down conductor (32) in the interior of the rotatable housing (22).

9. A current transfer arrangement according to any of the preceding claims, comprising a bracket (13) for mounting the down conductor segment (11) to the rotatable housing (22).

10. A current transfer arrangement according to any of the preceding claims, comprising a leaf-spring arrangement (14) for mounting the brush assembly (12, B) to the bracket (13) and for maintaining a physical contact between a brush (B) of the brush assembly (12, B) and the blade root band (10).

11. A direct-drive wind turbine (2) comprising
- a number of rotor blades (20) mounted on a hub (21),
- a rotatable housing (22) connected to the hub (21); and wherein
the direct-drive wind turbine (2) further comprises a lightning protection system with at least
- a down-conductor (31) arranged in the interior of each rotor blade (20);
- a down conductor (32)arranged in the interior of the rotatable housing (22); and
- a current transfer arrangement (1) according to any of claims 1 to 10, of which the blade root band (10) is mounted on the exterior of a rotor blade (20) in its root end region (200), and the down conductor segment (11) is mounted on the exterior of the rotatable housing (22).

12. A wind turbine according to claim 11, wherein the blade root band (10) of a current transfer arrangement (1) is mounted on the exterior of the blade (20) at a distance corresponding essentially to a radius of the rotatable housing (22).

13. A wind turbine according to claim 11, wherein the blade root band (10) of a current transfer arrangement (1) is arranged adjacent to a pitch interface (20P) of a rotor blade (20) .

14. A wind turbine according to claim 12, wherein the blade root band (10) of a current transfer arrangement (1) is realised as an outer ring (26) of a blade bearing (25, 26).

15. A wind turbine according to claim 14, wherein a down-conductor (31) in the interior of a rotor blade (20) is electrically connected to the outer ring (26) of the blade bearing (25, 26).
